# EUROPÄISCHE PATENTSCHRIFT

(11) **EP 2 520 504 B1**
(45) Veröffentlichungstag und Bekanntmachung des Hinweises auf die Patenterteilung: **26.02.2014**
(21) Anmeldenummer: 12164905.7
(22) Anmeldetag: 20.04.2012
(51) Int. Cl.: B65D 19/00, B65D 19/40, B65D 77/04

(54) **Palettenartiges Untergestell für Transport- und Lagerbehälter für Flüssigkeiten**
Palette-style subframe for transport and storage container for fluids
Châssis de type palette pour récipients de transport et de stockage pour liquides

(30) Priorität: 04.05.2011 DE 102011075263
(43) Veröffentlichungstag der Anmeldung: 07.11.2012
(73) Patentinhaber: PROTECHNA S.A., 1701 Fribourg (CH)
(72) Erfinder:
(74) Vertreter: advotec.

(56) Entgegenhaltungen:
- DE-U1- 20 218 766
- DE-U1- 20 316 883
- FR-A1- 2 213 882

## Beschreibung

Die vorliegende Erfindung betrifft ein palettenartiges Untergestell, insbesondere für Transport- und Lagerbehälter für Flüssigkeiten, die mit einem Innenbehälter aus Kunststoff mit einem verschließbaren Einfüllstutzen und einem Entleerstutzen zum Anschluss an eine Entnahmearmatur sowie einem Außenmantel aus einem Metallgitter oder Blech ausgestattet sind, wobei das Untergestell einen Boden zum Abstützen des Innenbehälters sowie Eckfüße und zwischen den Eckfüßen angeordnete Mittelfüße aus Metall aufweist, die auf einem Fußrahmen angebracht sind und an denen der Boden des Untergestells sowie der Außenmantel des Innenbehälters befestigt sind.

Untergestelle der eingangs genannten Art dienen einerseits dazu, mit geeigneten Hubstapeleinrichtungen eine handhabbare Plattform zur Lagerung und zum Transport der aus Kunststoff gefertigten und daher vergleichsweise verletzlichen Innenbehälter zur Verfügung zu stellen. Gleichzeitig dienen derartige Untergestelle in Kombination mit dem Außenmantel zum Schutz des Innenbehälters vor Beschädigungen. Dabei sollen die Untergestelle der Tatsache in besonderer Weise Rechnung tragen, dass aufgrund der Handhabung der Transport- und Lagerbehälter ein nicht unbeachtliches Risiko für die Innenbehälter besteht, beschädigt zu werden. Das palettenartige Untergestell stellt somit einen Schutzschild oder Protektor dar, der insbesondere Stoßbelastungen absorbieren soll, die auf den Innenbehälter beispielsweise bei einem Aufprall des Transport- und Lagerbehälters auf den Boden infolge unsachgemäßer Handhabung des Transport- und Lagerbehälters einwirken können. Hierzu muss das Untergestell in der Lage sein, entsprechende Belastungen aufzunehmen und auch noch nach einem aufgetretenen Belastungsfall nach wie vor als Handhabungsplattform für den Flüssigkeitsbehälter zu funktionieren.

Da insbesondere bei einem Absturz oder Fall des Transport- und Lagerbehälters mit unsymmetrischem Aufprall, also wenn beispielsweise das Untergestell mit einer Ecke zuerst auf den Boden auftrifft, nicht unerhebliche Schub- und Torsionskräfte auf das Untergestell einwirken, kommt den Eck- und Mittelfüßen des Untergestells eine besondere Aufgabe bei der Aufnahme entsprechender Belastung zu. Da sich die Eckfüße in der Regel über einen Eckbereich des Untergestells hinweg erstrecken, sind aufgrund der entsprechend mehrachsigen Körpergestalt der Eckfüße torsionssteife Ausgestaltungen relativ leicht realisierbar. Dem hingegen erweist sich eine torsionssteife Ausgestaltung der Mittelfüße, die sich eher einachsig längs einer Fußrahmenseite erstrecken, als problematischer.

Aus der DE 202 18 766 U1 sowie ebenfalls aus der DE 203 16 883 U1 ist ein palettenartiges Untergestell bekannt, das Mittelfüße aufweist, die im Verbund miteinander ausgebildet sind und an axialen Enden eines Profilkörpers ausgebildet sind, der gleichzeitig zur Versteifung des Bodens des Untergestells dient.

Der vorliegenden Erfindung liegt daher die Aufgabe zugrunde, ein palettenartiges Untergestell für einen Transport- und Lagerbehälter für Flüssigkeiten vorzuschlagen, das eine erhöhte Stabilität aufweist, um somit die Bereitstellung von Transport- und Lagerbehältern für Flüssigkeiten zu ermöglichen, die eine erhöhte Sicherheit gegen ein durch mangelnde Stabilität des Untergestells bedingtes Behälterversagen gewährleisten und sich in besonderer Weise zum Transport und zur Lagerung von Gefahrgut eignen.

Zur Lösung dieser Aufgabe weist das erfindungsgemäße Untergestell die Merkmale des Anspruchs 1 auf.

Bei dem erfindungsgemäßen Untergestell sind die Mittelfüße jeweils aus einem Profilkörper ausgebildet, der einen U-förmigen Querschnitt aufweist, mit einer Basiswand, einer äußeren Schenkelwand und einer inneren Schenkelwand, wobei die Basiswand und die Schenkelwände an axialen Endbereichen des Profilkörpers in einer Ebene quer zu einer Längsachse des Profilkörpers einen U-förmig ausgebildeten Randsteg ausbilden.

Bei dem erfindungsgemäßen Untergestell sind somit über den Randsteg die Basiswand und die beiden daran ansetzenden Schenkelwände so miteinander verbunden, dass der Mittelfuß bei einer Torsionsbelastung um eine Hochachse oder Längsachse eine erhöhte Torsionssteifigkeit aufweist. Insbesondere bewirkt der Randsteg eine Versteifung der Schenkelwände gegeneinander. Trotzdem ist es aufgrund der U-förmigen Ausgestaltung des Randsteges möglich, den Mittelfuß des erfindungsgemäßen Untergestells aus einem ebenen Blechzuschnitt in einem Tiefziehvorgang herzustellen, da die Ausbildung des Randstegs eine relativ geringe Materialmenge erfordert.

Als besonders vorteilhaft ist hervorzuheben, dass der als Profilkörper ausgebildete Mittelfuß eine hohe Eigenstabilität aufweist, so dass eine Stabilisierung der Form des Mittelfußes nicht erst durch den Verbund des Mittelfußes mit dem Fußrahmen bzw. dem Boden des Untergestells erreicht wird.

Insbesondere eine erfindungsgemäße Ausgestaltung des an der Behälterrückseite angeordneten Mittelfußes erweist sich als vorteilhaft, da dieser Mittelfuß in besonderer Weise dem Risiko einer Kollision mit einem Gabelzinken einer Hupstaplereinrichtung bei einem Unterfahren des Transport- und Lagerbehälters mit der Hupstaplereinrichtung ausgesetzt ist.

Als besonders vorteilhaft für die Verbindung des Mittelfußes mit dem Boden des Untergestells erweist es sich, wenn gemäß einer bevorzugten Ausführungsform die Schenkelwände jeweils einen oberen Stützrand aufweisen, der durch einen parallel zum Boden des Untergestells an den Schenkelwänden abgewinkelt angeordneten Randsteg gebildet ist, wobei die Randstege in einer gemeinsamen Stütz- oder Verbindungsebene angeordnet sind. Die Anordnung der Randstege in einer gemeinsamen Stütz- oder Verbindungsebene vereinfacht auch eine Relativausrichtung des Bodens zu dem Mittelfuß bei der Herstellung einer Verbindung zwischen dem Mittelfuß und dem Boden beträchtlich, da die korrekte Ausrichtung des Mittelfußes zur Ebene des Bodens bereits durch den Körperkontakt zwischen den Randstegen der Schenkel und dem Boden definiert ist.

Wenn gemäß einer weiteren bevorzugten Ausführungsform die äußere Schenkelwand des Profilkörpers in ihrem oberen, dem Boden des Untergestells zugewandten Bereich eine Ausformung aufweist, die gegenüber einem unteren Rand der Schenkelwand einen kastenförmigen Vorsprung - insbesondere nach Art eines an einer Gebäudefassade angeordneten Erkers - bildet, wird mit einfachen Maßnahmen eine weitere Erhöhung der Steifigkeit des Profilkörpers erreicht.

Bei einer Erstreckung des kastenförmig ausgebildeten Vorsprungs bis in den axialen Randsteg hinein, wird auch der Randsteg in die steifigkeitsfördernde Maßnahme verstärkend mit einbezogen.

Grundsätzlich bietet eine erkerförmige Ausgestaltung des Vorsprungs an der Schenkelwand auch den Vorteil, dass zwischen dem Oberrand der äußeren Schenkelwand und ihrem Unterrand im Übergang zur Basiswand ein Rücksprung realisiert ist, also dass der Mittelfuß in besonderer Weise den Abmessungen des Fußrahmens angepasst ist, der in der Regel einen geringeren Durchmesser aufweist als der Boden des Untergestells, um eine Stapelbarkeit der Transport- und Lagerbehälter zu realisieren.

Wenn die innere Schenkelwand gegenüberliegend dem kastenförmigen Vorsprung der äußeren Schenkelwand eine sich vom oberen Randsteg der inneren Schenkelwand bis zur Basiswand erstreckende, nach außen gerichtete Versteifungssicke aufweist, ist einerseits eine weitere Maßnahme zur Erhöhung der Steifigkeit des Profilkörpers realisiert. Andererseits bildet die nach außen gerichtete Versteifungssicke eine Art Ableitkante aus, die bei einem Aufprall eines Gabelzinkens einer Hubstaplereinrichtung bei einem Unterfahren des Transport- und Lagerbehälters mit einer Hubstaplereinrichtung ein Ableiten oder Abprallen des Gabelzinkens von dem Mittelfuß unterstützt, so dass die Gefahr einer Beschädigung des Untergestells bzw. des Mittelfußes durch die Kollision mit einem Gabelzinken einer Hubstaplereinrichtung reduziert wird.

Besonders vorteilhaft ist es, wenn der obere Randsteg der inneren Schenkelwand die Basiswand zu einem Innenraum des Untergestells hin überragt und die Versteifungssicke zum oberen Randsteg hin geneigt verläuft, so dass der Mittelfuß durch die auskragende Ausbildung der Versteifungssicke den Boden des Untergestells in besonderer Weise aussteift.

Insbesondere, wenn der kastenförmige Vorsprung in der äußeren Schenkelwand zweifach ausgebildet ist, derart, dass zwei jeweils in den axialen Endbereichen der Schenkelwand ausgebildete und sich in den axialen Randsteg erstreckende Kastenvorsprünge durch eine Einbuchtung in der Schenkelwand voneinander getrennt sind, ist durch die Einbuchtung eine exponierte Anordnung des Randstegs zwischen den Kastenvorsprüngen gegeben, so dass eine gute Zugänglichkeit des Randstegs für eine Befestigung am Boden des Untergestells realisiert ist.

Eine entsprechend exponierte Ausbildung des Randstegs der inneren Schenkelwand wird möglich, wenn jeweils gegenüberliegend einem kastenförmigen Vorsprung eine Versteifungssicke ausgebildet ist, so dass zwischen den Versteifungssicken Raum für eine Verbindung zwischen dem Randsteg und dem Boden des Untergestells möglich ist.

Wenn zwei einander gegenüberliegende Mittelfüße einen Profilkörper aufweisen und die Randstege der inneren Schenkelwände der Profilkörper über eine Bodentraverse miteinander verbunden sind, können zwei einander gegenüberliegende Mittelfüße in direkter Weise miteinander versteift werden und so eine Versteifungsbrücke für den Boden des Untergestells ausbilden.

Nachfolgend wird eine bevorzugte Ausführungsform anhand der Zeichnung näher erläutert. Es zeigen:
- **Fig. 1**: eine perspektivische Darstellung eines mit einem palettenartigen Untergestell ausgerüsteten Transport- und Lagerbehälters für Flüssigkeiten;
- **Fig. 2**: eine vergrößerte Darstellung des Untergestells im Bereich eines Mittelfußes;
- **Fig. 3**: eine isometrische Einzeldarstellung eines Mittelfußes;
- **Fig. 4**: eine Seitenansicht des in **Fig. 3** dargestellten Mittelfußes;
- **Fig. 5**: zwei Mittelfüße vor ihrer Verbindung mit einer Bodentraverse;
- **Fig. 6**: die mit der Bodentraverse zur Ausbildung einer Versteifungsbrücke verbundenen Mittelfüße;

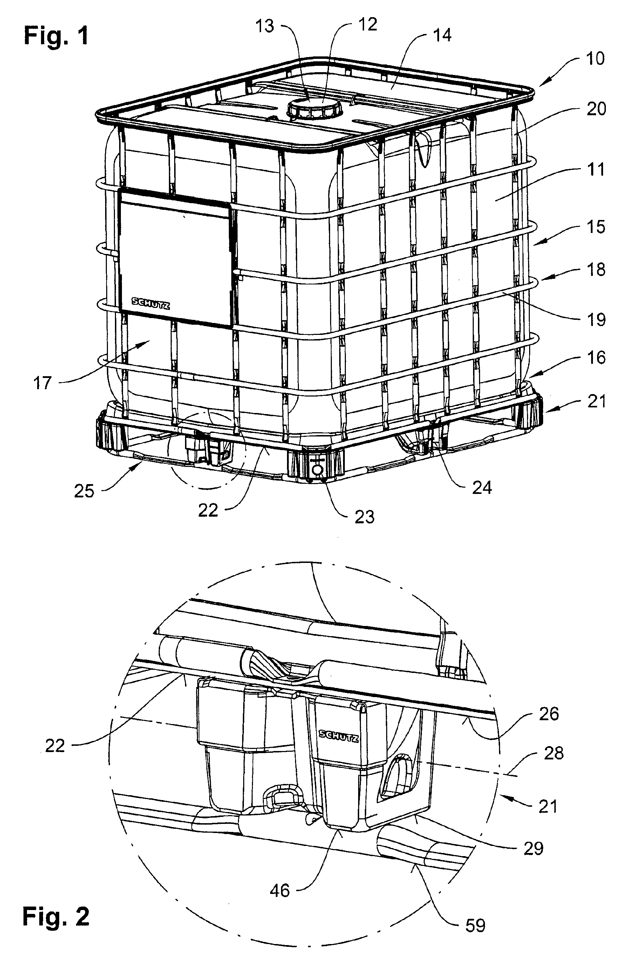

**Fig. 1** zeigt einen als Ein- und Mehrwegbehälter verwendbaren Transport- und Lagerbehälter 10 für Flüssigkeiten mit einem Innenbehälter 11 aus Kunststoff, der einen mit einem Deckel 12 verschließbaren Einfüllstutzen 13 im oberen Behälterboden 14 und an einer Behälterfrontseite 15 im Bereich eines unteren Behälterbodens 16 einen hier nicht sichtbaren Entleerstutzen aufweist, der zum Anschluss einer Entnahmearmatur dient. Der Innenbehälter 11 ist austauschbar in einem Außenmantel 18 aus sich kreuzenden waagerechten und senkrechten Gitterstäben 19, 20 aus Metall aufgenommen, der ebenso wie der Innenbehälter 11 auf einem palettenartigen Untergestell 21 angeordnet ist.

Das Untergestell 21 weist einen Boden 22 zum Abstützen des Innenbehälters 11 sowie Eckfüße 23 und Mittelfüße 24 auf, die auf einem Fußrahmen 25 angebracht sind und an denen der Boden 22 sowie der Außenmantel 18 des Innenbehälters 11 befestigt sind.

**Fig. 2** zeigt einen an einer Behälterrückseite 17 **(****Fig.** 1) zwischen zwei Eckfüßen 23 angeordneten Mittelfuß 24, der sich zwischen einem Fußrahmenrohr 59 und einem Umfangsrand 26 des Bodens 22 erstreckt und somit den Boden 22 des Untergestells 21 gegenüber dem Fußrahmenrohr 25 abstützt.

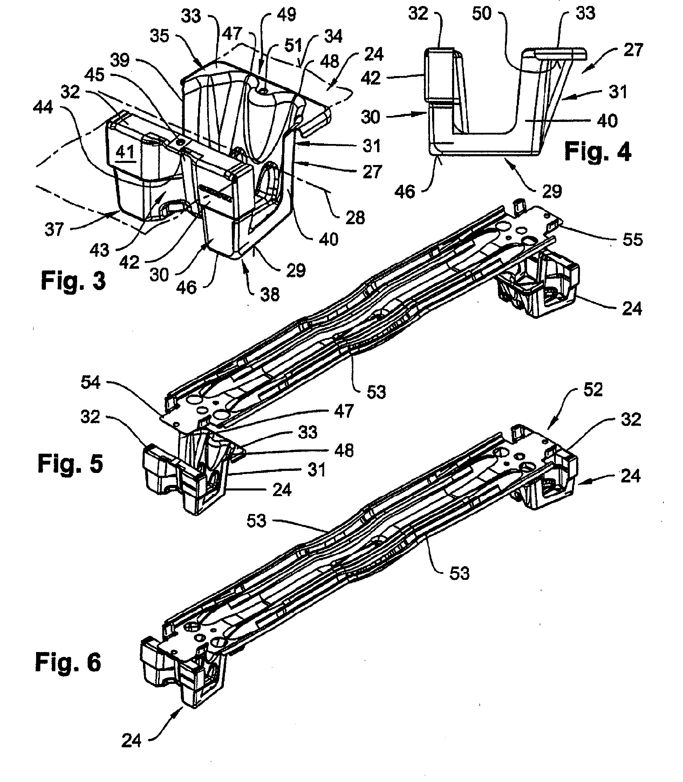

Wie insbesondere aus einer Zusammenschau der **Fig. 3 und 4** deutlich wird, weist der Mittelfuß 24 einen Profilkörper 27 auf, der einstückig aus einem Blechzuschnitt gebildet ist und, wie insbesondere aus **Fig. 4** zu ersehen ist, bezogen auf eine Längsachse 28 des Profilkörpers 27, die sich parallel zum Fußrahmenrohr 59 erstreckt **(****Fig. 2****),** einen U-förmigen Querschnitt aufweist. Der Profilkörper 27 ist zusammengesetzt aus einer Basiswand 29 und daran angeordneten Schenkelwänden 30, 31, wobei die in **Fig. 4** linke Schenkelwand 30, entsprechend ihrer in **Fig. 2** dargestellten Relativanordnung am Untergestell 21, nachfolgend als äußere Schenkelwand 30 und die in **Fig. 4** rechte Schenkelwand 31, entsprechend ihrer Relativanordnung am Untergestell 21, nachfolgend als innere Schenkelwand 31 bezeichnet wird.

Beide Schenkelwände 30, 31 weisen an ihrem Oberrand einen abgewinkelt angeordneten Randsteg 32 bzw. 33 auf, die in einer gemeinsamen Stützebene 34 angeordnet sind und zusammen eine Stützfläche 35 ausbilden, mit der sich der Mittelfuß 24 am Boden 22 des Untergestells 21 abstützt **(****Fig. 2****).** Diese Abstützung am Boden 22 kann unmittelbar erfolgen, so dass also die Randstege 32, 33 unmittelbar an der Unterseite des Bodens 22 anliegen oder mittelbar, wobei, wie insbesondere in **Fig. 6** dargestellt, eine zwei einander gegenüberliegende Mittelfüße 24 miteinander verbindende Bodentraverse 53 auf den Randstegen 32, 33 aufliegt und die Verbindung der Mittelfüße 24 mit dem Boden 22 mit zwischenliegender Anordnung der Bodentraverse 53 erfolgt.

Wie insbesondere die **Fig. 3** zeigt, weist der Profilkörper 27 an seinen axialen Endbereichen 37, 38 abgewinkelt zur Basiswand 23 und den Schenkelwänden 30, 31 angeordnete axiale Randstege 39 bzw. 40 auf, die im Falle des vorliegenden Ausführungsbeispiels ebenfalls U-förmig ausgebildet ist und die Schenkelwände 30, 31 gegeneinander versteifen. Auf der Seite der äußeren Schenkelwand 30 gehen die axialen Randstege 39, 40 über in den am Oberrand der Schenkelwand 30 ausgebildeten Randsteg 32. Auf der Seite der inneren Schenkelwand 31 setzen sich die axialen Randstege 39, 40 fort in den am Oberrand der inneren Schenkelwand ausgebildeten Randsteg 33.

Wie insbesondere aus **Fig. 3** zu ersehen ist, weist die äußere Schenkelwand 30 in den axialen Endbereichen 37, 38 des Profilkörpers 27 nach außen gerichtete Ausformungen auf, die in etwa die Ausgestaltung eines an einer Gebäudefassade ausgebildeten Erkers aufweisen und nachfolgend als Wanderker 41, 42 bezeichnet werden. Die Wanderker 41, 42 sind kastenförmig ausgebildet und erstrecken sich bis in die axialen Randstege 39, 40 hinein. Infolge der axialen Beabstandung der Wanderker 41, 42 voneinander ist zwischen den Wanderkern 41, 42 eine Einbuchtung 43 ausgebildet. Durch die Einbuchtung 43 ist eine Unterseite 44 des Randstegs 32 exponiert angeordnet, so dass im Bereich der Einbuchtung 43 eine gut zugängliche Befestigungsöffnung 45 ausgebildet ist, die die Durchführung eines Verbindungselements, beispielsweise einer Schraube, zur Verbindung des Randstegs 32 mit dem Boden 22 ermöglicht.

Wie ferner die **Fig. 3 und 4** zeigen, überragen die Wanderker 41, 42 die Basiswand 29 des Profilkörpers 27 nach außen, so dass ein Verbindungsrand 46 der Basiswand 29, der, wie **Fig. 2** zeigt, zur Verbindung mit dem Fußrahmenrohr 59 dient, gegenüber dem Randsteg 32, der zur Verbindung mit dem Umfangsrand 26 des Bodens 22 dient, entsprechend nach innen zurückversetzt ist.

Fig. **3** zeigt, dass jeweils gegenüberliegend den in der äußeren Schenkelwand 30 ausgebildeten Wanderkern 41, 42 in der inneren Schenkelwand 31 versteifende Ausformungen ausgebildet sind, die nachfolgend als Versteifungssicken 47, 48 bezeichnet werden. Zwischen den Versteifungssicken 47, 48 ist unterhalb des Randstegs 33 eine zur Längsachse 28 des Profilkörpers 27 gerichtete Einbuchtung 49 ausgebildet, derart, dass eine Unterseite 49 des Randstegs 33 zugänglich ist und im Bereich der Einbuchtung 49 eine Befestigungsöffnung 51 im Randsteg 33 ausgebildet ist, die analog der Befestigungsöffnung 45 im Randsteg 32 die Durchführung eines Verbindungselements zur Verbindung des Randstegs 33 mit dem Boden 22 ermöglicht.

Wie bereits vorstehend erwähnt, besteht sowohl die Möglichkeit, den Mittelfuß 24 unmittelbar mit dem Boden 22 zu verbinden, wie es bei dem in **Fig. 1** dargestellten, an der Behälterrückseite 17 am Untergestell 21 angeordneten Mittelfuß 24 der Fall ist, oder, zwei einander gegenüberliegend angeordnete Mittelfüße 24, also zwei Mittelfüße 24, die sich an einander gegenüberliegenden Behälterseiten des Untergestells 21 befinden, zur Ausbildung einer in **Fig. 6** dargestellten Versteifungsbrücke 52 mit der Bodentraverse 53 zu verbinden, die zur Versteifung des Bodens 22 an dessen Unterseite anliegend verläuft. Damit erfolgt, wie auch aus den **Fig. 5 und 6** ersichtlich, eine abstützende Anordnung der Bodentraverse 53 mit ihren Verbindungsendbereichen 54, 55 auf den Randstegen 32, 33 der einander gegenüberliegend angeordneten Mittefüße 24. Dabei wird deutlich, dass aufgrund der nach innen geneigten Ausrichtung der Versteifungssicken 47, 48 in den inneren Schenkelwänden 31 der Mittelfüße 24 sowohl ein hinsichtlich der Krafteinleitung günstiger Übergang zwischen den Schenkelwänden 31 und der Bodentraverse 53 erfolgt, als auch eine die Biegefestigkeit der Schenkelwände 31 erhöhende Wirkung erzielt wird.

## Patentansprüche

1. Palettenartiges Untergestell (21), insbesondere für Transport- und Lagerbehälter (10) für Flüssigkeiten, die mit einem Innenbehälter (11) aus Kunststoff mit einem verschließbaren Einfüllstutzen (13) und einem Entleerstutzen zum Anschluss einer Entnahmearmatur sowie einem Außenmantel (18) aus einem Metallgitter oder Blech ausgestattet sind, wobei das Untergestell einen Boden (22) zum Abstützen des Innenbehälters sowie Eckfüße (23) und zwischen den Eckfüßen angeordnete Mittelfüße (24) aus Metall aufweist, die auf einem Fußrahmen (25) angebracht sind und an denen der Boden des Untergestells sowie der Außenmantel des Innenbehälters befestigt sind,
**dadurch gekennzeichnet,**
**dass** die Mittelfüße des Untergestells jeweils als ein Profilkörper (27) ausgebildet sind, der einen U-förmigen Querschnitt aufweist, mit einer Basiswand (29), einer äußeren Schenkelwand (30) und einer inneren Schenkelwand (31), wobei die Basiswand und die Schenkelwände an axialen Endbereichen (37, 38) des Profilkörpers in einer Ebene quer zu einer Längsachse (28) des Profilkörpers einen U-förmig ausgebildeten axialen Randsteg (39, 40) ausbilden.

2. Untergestell nach Anspruch 1,
**dadurch gekennzeichnet,**
**dass** die Schenkelwände (30, 31) jeweils einen oberen Stützrand aufweisen, der durch einen parallel zum Boden (22) des Untergestells (21) an den Schenkelwänden abgewinkelt angeordneten Randsteg (32, 33) gebildet ist, wobei die Randstege in einer gemeinsamen Stützebene (34) angeordnet sind.

3. Untergestell nach Anspruch 1 oder 2,
**dadurch gekennzeichnet,**
**dass** die äußere Schenkelwand (39) in ihrem oberen, dem Boden (22) des Untergestells (21) zugewandten Bereich eine Ausformung aufweist, die gegenüber einem unteren Rand der Schenkelwand einen kastenförmigen Vorsprung bildet.

4. Untergestell nach Anspruch 3,
**dadurch gekennzeichnet,**
**dass** sich der kastenförmige Vorsprung in den axialen Randsteg (39, 40) erstreckt.

5. Untergestell nach einem der vorangehenden Ansprüche,
**dadurch gekennzeichnet,**
**dass** die innere Schenkelwand (31) gegenüberliegend dem kastenförmigen Vorsprung der äußeren Schenkelwand (30) eine sich vom oberen Randsteg (33) der inneren Schenkelwand bis zur Basiswand (29) erstreckende, nach außen gerichtete Versteifungssicke (47, 48) aufweist.

6. Untergestell nach Anspruch 5,
**dadurch gekennzeichnet,**
**dass** der obere Randsteg (33) der inneren Schenkelwand (31) die Basiswand (29) zu einem Innenraum des Untergestells (21) hin überragt und die Versteifungssicke (47, 48) zum oberen Randsteg hin geneigt verläuft.

7. Untergestell nach einem der vorangehenden Ansprüche,
**dadurch gekennzeichnet,**
**dass** der kastenförmige Vorsprung in der äußeren Schenkelwand (30) zweifach ausgebildet ist, derart, dass zwei jeweils in den axialen Endbereichen (37, 38) der Schenkelwand ausgebildete und sich in den axialen Randsteg (39, 40) erstreckende Vorsprünge durch eine Einbuchtung (43) voneinander getrennt sind.

8. Untergestell nach Anspruch 7,
**dadurch gekennzeichnet,**
**dass** die innere Schenkelwand (31) jeweils gegenüberliegend einem kastenförmigen Vorsprung eine Versteifungssicke (47, 48) aufweist.

9. Untergestell nach einem der vorangehenden Ansprüche,
**dadurch gekennzeichnet,**
**dass** zwei einander gegenüberliegende Mittelfüße (24) einen Profilkörper (27) aufweisen und die Randstege (33) der inneren Schenkelwände (31) der Profilkörper über eine Bodentraverse (53) miteinander verbunden sind.

10. Transport- und Lagerbehälter (10) für Flüssigkeiten, der mit einem Innenbehälter (11) aus Kunststoff mit einem verschließbaren Einfüllstutzen (13) und einem Entleerstutzen zum Anschluss einer Entnahmearmatur sowie einem Außenmantel (18) aus einem Metallgitter oder Blech ausgestattet ist, wobei der Innenbehälter und der Außenmantel auf einem Boden (22) eines palettenartigen Untergestells (21) nach einem oder mehreren der Ansprüche 1 bis 9 angeordnet sind.

## Claims

1. A pallet-like understructure (21), in particular for transport and storage containers (10) for liquids, which are equipped with an inner container (11) made of plastic, having a closable filling neck (13) and a draining neck for connecting a tapping armature, as well as with an outer jacket (18) made of a metal grid or sheet metal, wherein the understructure comprises a bottom (22) for supporting the inner container as well as corner feet (23) and central feet (24) which are made of metal, are arranged between the corner feet, and are mounted onto a foot frame (25) and to which the bottom of the understructure as well as the outer jacket of the inner container are attached,
**characterised in that**
the central feet of the understructure are embodied as one profile body (27) in each case, which comprises a U-shaped cross-section, having a base wall (29), an outer leg wall (30) and an inner leg wall (31), wherein the base wall and the leg walls, at axial end areas (37, 38) of the profile body and in a plane running transversely to a longitudinal axis (28) of the profile body, embody an axial edge web (39, 40), which is embodied to be U-shaped.

2. The understructure according to claim 1,
**characterised in that**
the leg walls (30, 31) comprise one upper supporting edge in each case, which is formed by an edge web (32, 33), which is arranged to be angled at the leg walls parallel to the bottom (22) of the understructure (21), wherein the edge webs are arranged in a common supporting plane (34).

3. The understructure according to claim 1 or 2,
**characterised in that**
the outer leg wall (39), in its upper area, which faces the bottom (22) of the understructure (21), comprises a bulge, which forms a box-shaped projection opposite to a lower edge of the leg wall.

4. The understructure according to claim 3,
**characterised in that**
the box-shaped projection extends into the axial edge web (39, 40).

5. The understructure according to one of the previous claims,
**characterised in that**
the inner leg wall (31) comprises a stiffening seam (47, 48), which is situated to be opposite to the box-shaped projection of the outer leg wall (30) and which extends from the upper edge web (33) of the inner leg wall to the base wall (29) and is directed outwardly.

6. The understructure according to claim 5,
**characterised in that**
the upper edge web (33) of the inner leg wall (31) protrudes beyond the base wall (29) towards an inner space of the understructure (21), and the stiffening seam (47, 48) runs to be inclined towards the upper edge web.

7. The understructure according to one of the previous claims,
**characterised in that**
the box-shaped projection in the outer leg wall (30) is embodied to be two-fold, in such a way that two projections, which are embodied in the axial end areas (37, 38) of the leg wall in each case and which extend into the axial edge web (39, 40), are separated from each other by a notch (43).

8. The understructure according to claim 7,
**characterised in that**
the inner leg wall (31) comprises one stiffening seam (47, 48) in each case, which is situated to be opposite to a box-shaped projection.

9. The understructure according to one of the previous claims,
**characterised in that**
two central feet (24), which are situated to be opposite to each other, comprise a profile body (27), and the edge webs (33) of the inner leg walls (31) of the profile bodies are connected to one another via a bottom cross member (53).

10. Transport and storage container (10) for liquids, which is equipped with an inner container (11) made of plastic, having a closable filling neck (13) and a draining neck for connecting a tapping armature, as well as with an outer jacket (18) made of a metal grid or sheet metal, wherein the inner container and the outer jacket are arranged on a bottom (22) of a pallet-like understructure (21) according to one or more of the claims 1 to 9.

## Revendications

1. Bâti (21) en forme de palette, en particulier pour des cuves (10) de transport et stockage pour des liquides, qui sont équipées d'une cuve (11) intérieure en matière plastique ayant une tubulure (13) de remplissage fermable et une tubulure de vidage pour le raccordement d'une armature de prélèvement et équipées d'une enveloppe (18) extérieure en treillis métallique ou en tôle, le bâti comprenant un fond (22) pour l'appui de la cuve intérieure ainsi que des pieds (23) d'angle et des pieds centraux (24) en métal qui sont disposés entre les pieds d'angle et qui sont montés sur un cadre (25) de piètement et auxquels le fond du bâti ainsi que l'enveloppe extérieure de la cuve intérieure sont fixés,
**caractérisé en ce que**
les pieds centraux du bâti sont respectivement conçus comme un corps (27) profilé qui comprend une section transversale en forme de U, ayant une paroi (29) de base, une paroi (30) extérieure de branche et une paroi (31) intérieure de branche, la paroi de base et les parois de branche concevant, à des zones (37, 38) axiales d'extrémité du corps profilé et dans un plan orienté transversalement à un axe (28) longitudinal du corps profilé, une barrette (39, 40) axiale de bord qui est conçue en forme de U.

2. Bâti selon la revendication 1,
**caractérisé en ce que**
les parois (30, 31) de branche respectivement comprennent un bord supérieur d'appui qui est formé par une barrette (32, 33) de bord qui est disposée de manière à être coudée aux parois de branche, parallèlement au fond (22) du bâti (21), les barrettes de bord étant disposées dans un plan (34) d'appui commun.

3. Bâti selon la revendication 1 ou 2,
**caractérisé en ce que**,
dans sa zone supérieure qui s'oriente vers le fond (22) du bâti (21), la paroi (39) extérieure de branche comprend une voussure qui forme une avance en forme de caisse en face d'un bord inférieur de la paroi de branche.

4. Bâti selon la revendication 3,
**caractérisé en ce que**
l'avance en forme de caisse s'étend dedans la barrette (39, 40) axiale de bord.

5. Bâti selon l'une quelconque des revendications précédentes,
**caractérisé en ce que**,
face à l'avance en forme de caisse de la paroi (30) extérieure de branche, la paroi (31) intérieure de branche comprend une nervure (47, 48) de renforcement qui s'étend de la barrette (33) supérieure de bord de la paroi intérieure de branche jusqu'à la paroi (29) de base et qui est dirigée vers l'extérieur.

6. Bâti selon la revendication 5,
**caractérisé en ce que**
la barrette (33) supérieure de bord de la paroi (31) intérieure de branche fait saillie au-dessus de la paroi (29) de base vers un espace intérieur du bâti (21) et la nervure (47, 48) de renforcement s'étend en étant inclinée vers la barrette supérieure de bord.

7. Bâti selon l'une quelconque des revendications précédentes,
**caractérisé en ce que**
l'avance en forme de caisse est conçue doublement dans la paroi (30) extérieure de branche, de telle sorte que deux avances, qui sont respectivement conçues dans les zones (37, 38) axiales d'extrémité de la paroi de branche et qui s'étendent dedans la barrette (39, 40) axiale de bord, sont séparées l'une de l'autre par une indentation (43).

8. Bâti selon la revendication 7,
**caractérisé en ce que**
la paroi (31) intérieure de branche comprend une nervure (47, 48) de renforcement, respectivement face à une avance en forme de caisse.

9. Bâti selon l'une quelconque des revendications précédentes,
**caractérisé en ce que**
deux pieds (24) centraux, qui sont orientés l'un face à l'autre, comprennent un corps (27) profilé, et les barrettes (33) de bord des parois (31) intérieures de branche des corps profilés sont reliées l'une avec l'autre via une traverse (53) de fond.

10. Cuve (10) de transport et stockage pour des liquides, qui est équipée d'une cuve (11) intérieure en matière plastique ayant une tubulure (13) de remplissage fermable et une tubulure de vidage pour le raccordement d'une armature de prélèvement et équipée d'une enveloppe (18) extérieure en treillis métallique ou en tôle, la cuve intérieure et l'enveloppe extérieure étant disposées sur un fond (22) d'un bâti (21) en forme de palette selon l'une ou plusieurs des revendications 1 à 9.
